# EUROPEAN PATENT SPECIFICATION

(11) **EP 2 879 459 B1**
(45) Date of publication and mention of the grant of the patent: **14.03.2018**
(21) Application number: 13823295.4
(22) Date of filing: 25.07.2013
(51) Int. Cl.: H04W 76/02, H04L 12/28, H04W 12/06, H04L 29/06, H04W 84/12, H04L 12/66

(54) **METHOD AND DEVICE FOR DATA TRANSMISSION**
VERFAHREN UND VORRICHTUNG FÜR DATENÜBERTRAGUNG
PROCÉDÉ ET DISPOSITIF POUR UNE TRANSMISSION DE DONNÉES

(30) Priority: 25.07.2012 CN 201210259527
(43) Date of publication of application: 03.06.2015
(73) Proprietor: ZTE Corporation, Shenzhen, Guangdong 518057 (CN)
(72) Inventor: BI, Yifeng, Shenzhen Guangdong 518057 (CN); YOU, Jianjie, Shenzhen Guangdong 518057 (CN); ZHOU, Xiaoyun, Shenzhen Guangdong 518057 (CN)
(74) Representative: Novagraaf Technologies
(86) International application number: PCT/CN2013/080142
(87) International publication number: WO 2014/015819

(56) References cited:
- CN-A- 101 141 355
- CN-A- 101 730 072
- CN-A- 102 244 859
- CN-A- 102 348 193
- HUAWEI ET AL: "S2a QoS Interworking Consideration for P4C BB2", 3GPP DRAFT; S2-123040-S2A QOS INTERWORKING ARCHITECTURE CONSIDERATION R1.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Barcelona; 20090219, 3 July 2012 (2012-07-03), XP050633553, [retrieved on 2012-07-03]

## Description

### Technical Field

The present invention relates to the field of communications, and in particular, to a method and device for transmitting data.

### Background

With the development of network technologies and users' requirements for the services, the terminals gradually become multi-modelling and can select to access to the access networks of different types so as to bear diversified services. Different network connections have different properties and transmission capabilities, thus the users' requirements for multi-service and diversity can be better satisfied. Multi-mode terminals can realise seamless connections between different types of wireless access networks, for example, the connection between a 3GPP (3^{rd} Generation Partnership Project) EPS (Evolved Packet System) and an IEEE (Institute of Electrical and Electronics Engineers) 802.11 WLAN (Wireless Local Area Networks). A WLAN can provide a very high data speed in a small-scale family and hot area, while a cellular network can provide a higher flexibility and ubiquitous coverage, but the data speed thereof is lower. If the advantages of the two could be combined, the users will benefit therefrom. Within a coverage range of a WLAN access point, the multi-mode terminal performs data access and VoIP (Voice over Internet Protocol, network telephone) application using the WLAN, and at the same time can also use an overlapped cellular network to perform voice calling or media access.

At present, BBF (Broadband Forum) and 3GPP are working on the standardization of FMC (Fixed Mobile Convergence), and the scenarios related to include the authentication, address allocation and strategy control of a 3GPP UE (User Equipment) accessing from a BBF network via an RG (Residential Gateway). In the authentication process, the 3GPP UE, as an 802.1x customer service end, initiates an access authentication to the RG. At this moment, the RG, as an 802.1x authenticator and an RADIUS (Remote Authentication Dial In User Service) customer service end, initiates an authentication request to a BBF AAA (Authentication Authorization Accounting) server, with an authentication message in an RADIUS protocol or a Diameter protocol (an enhancement protocol of the RADIUS). In the address request process, an address request message initiated by the 3GPP UE makes a request for an IP address to a PDN-GW (Packet Data Network Gateway, or P-GW, or PGW) via a BNG (Broadband Network Gateway). Wherein an S2a session is established between the BNG and the PDN-GW, and is implemented by a GTP (GPRS (General Packet Radio Service) Tunneling Protocol) or a Proxy Mobile Internet Protocol (PMIP) tunnel.

It should be noted that the BNG is one kind of fixed network gateway. In some cases, the fixed network gateway may also be an IP Edge (IP Edge Equipment), or a BRAS (Broadband Remote Access Server). The following only takes the BNG as an example to introduce the establishment procedure of a session in a scenario supported by the BNG.

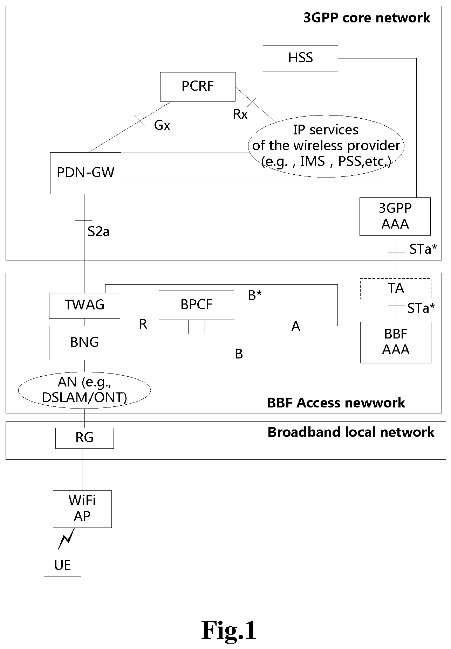

In the related technologies, each user BNG needs to establish an S2a session with the PDN-GW, and in order to support the scenario in the existing networks, all the BNG equipment need to be updated, and this will greatly affects the existing networks. In order to solve the problem, the fixed network access gateway (e.g., a TWAG (Trust WLAN Access Gateway)) is introduced. Refer to Fig. 1. Fig. 1 is an architecture diagram of a WLAN accessing an evolved packet network (EPC) and supporting strategy intercommunication according to the related technologies.

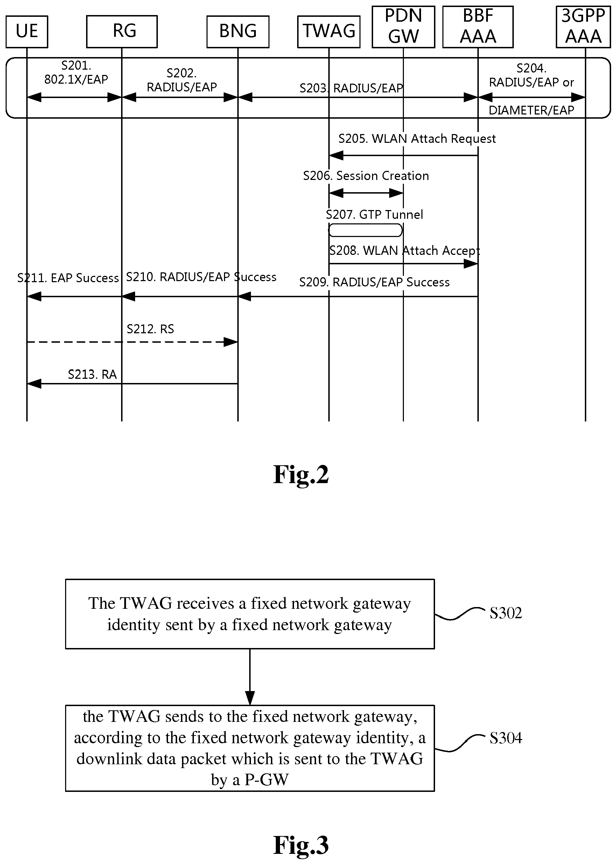

By introducing a fixed network access gateway TWAG, the problem of performing a large scale update on the BNG equipment is solved, and the influence on the existing network is maximally reduced. On the basis of the current updated network, refer to Fig. 2. Fig. 2 is a flowchart of a terminal accessing the EPC via the WLAN according to the related technologies. As shown in Fig. 2, the access of the terminal is performed in accordance with the following steps:
Step S201, the 3GPP UE sending an authentication protocol start (EAPoL-Start) message to the RG to perform authentication via the 802.1X protocol, wherein the UE is the client of the 802.1X, and the RG is the authenticator of the 802.1X.
Step S202, after receiving the EAPoL Start message sent by the UE, the RG sending an authentication protocol ID request (EAP Identity Request) to the UE, which is used for notifying the UE to report the user name; after receiving an EAP Identity Request message sent by the RG, the UE replying to the RG with an authentication protocol ID response (EAP Identity Response) message, wherein the message carries the user name; and then the RG encapsulating the received EAP Identity Response message into an authentication access request (RADIUS Access Request) message, and sending the RADIUS Access Request message to the BNG.
Step S203, the BNG, as an RADIUS Proxy, sending the RADIUS Access Request message received from the RG to a BBF AAA.
Step S204, the BBF AAA forwarding the RADIUS Access Request message received from the BNG to the 3GPP AAA according to the Network Address Identifier (NAI) of the UE. If the BBF network uses the RADIUS protocol, while the 3GPP network uses the DIAMETER protocol, then there exists a TA (Translation Agent) between the BBF AAA and the 3GPP AAA to perform protocol conversion.
Step S205, the BBF AAA sending to the TWAG an UE attachment request message which carries the subscription information of the UE.
Step S206, the TWAG sending a session creation request message to a PDN gateway of the 3GPP network, and the P-GW responding a session creation response to the TWAG, wherein in the session creation response responded to the TWAG, the PDN gateway sends an IP address (which may be an IPv4 address and/or an IPv6 address) allocated for the terminal by the PDN gateway to the TWAG.
Step S207, a tunnel being established between the TWAG and the PDN gateway through step S206.
   Note: step S206 and step S207 assume that a GTP protocol is adopted between the TWAG and the PDN gateway. If a PMIPv6 (proxy mobile IP version 6) protocol is adopted between the TWAG and the PDN gateway, the message in step S206 should be a PBU (Proxy binding update) and PBA (Proxy binding Ack) message, and the tunnel corresponding to S207 should be a PMIPv6 tunnel.
Step S208, the TWAG replying to the BBF AAA with an UE attachment success message which carries the IP address of the UE.
Step S209, the BBF AAA sending to the BNG an UE authentication success response message which carries the IP address of the UE.
Step S210, at the same time, the BNG sending the authentication success response message of the UE to the RG according to the received UE address.
Step S211, the RG replying to the UE with the authentication success response message.
Step S212, the UE sending to the RG an address request message, for example, a DHCP Discover or Router Solicitation message (the RS message is optional).
Step S213, after receiving the address request message initiated by the UE, the BNG sending to the UE the IP address of the UE, for example, a DHCP Offer or RA message.

The terminal UE accesses the EPC (Evolved Packet Core) via the WLAN network through the steps above. According to the above-mentioned description, because the BNG and the TWAG have a many-to-one relationship, the address or domain name of the TWAG can be configured on the BNG. After the service data of the terminal UE arrives at the BNG, the BNG can send same to the TWAG by means of designating a route or equipment-level tunnel.

However, after the downlink service data packet of the terminal UE arrives at the TWAG, the TWAG cannot send the service data packet to the correct BNG (fixed network gateway) so as to send same to the correct terminal UE. Document XP050633553 discloses a TWAG that receives an access identifier (e.g. an IP address) of a Broadband Network Gateway (BNG) and transmits download traffic from a Packet Data Network Gateway (PDN-GW) to the BNG.

At present, there is no effective solution for the problem that the TWAG cannot send the service data packet to the correct fixed network gateway (e.g., a BNG) so as to send same to the correct terminal UE in the related technologies.

### Summary

The invention is defined by a method according to claim 1 an a trusted WLAN access gateway according to claim 5. Further embodiments are defined by the dependent claims.

Through the embodiments of the present invention, by the way of carrying a fixed network gateway identity of a fixed network gateway in an authentication message in an authentication process of a user terminal (UE) accessing an evolved packet network (EPC); and after establishing a corresponding relationship between the fixed network gateway identity and a tunnel between the TWAG and the packet data network gateway (PDN GW), transmitting service data according to the corresponding relationship, the problem that the TWAG cannot send the service data packet to the correct fixed network gateway so as to send same to the correct terminal UE in the related technologies is solved, the correct routing and forwarding of the downlink data service is realised, and thus the effect that smooth deployment of a terminal UE service is ensured is achieved.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is an architecture diagram of a WLAN accessing an evolved packet network (EPC) and supporting strategy intercommunication according to the related technologies;
FIG. 2 is a flowchart of a terminal accessing the EPC via the WLAN according to the related technologies;
Fig. 3 is a flowchart of a data transmission method according to the embodiment one of the present invention;
Fig. 4 is a flowchart of a data transmission method according to the embodiment two of the present invention;
Fig. 5 is a flowchart of a data transmission method according to the preferred embodiment one of the present invention;
Fig. 6 is a flowchart of a data transmission method according to the preferred embodiment two of the present invention;
Fig. 7 is a flowchart of a data transmission method according to the preferred embodiment three of the present invention;
Fig. 8 is a structural block diagram of a data transmission device according to the embodiment one of the present invention;
Fig. 9 is a structural block diagram of a data transmission device according to the preferred embodiment one of the present invention;
Fig. 10 is a structural block diagram of a data transmission device according to the embodiment two of the present invention; and
Fig. 11 is a structural block diagram of a data transmission device according to the preferred embodiment two of the present invention.

### Detailed Description of the Embodiments

The disclosure is described below with reference to the accompanying drawings and embodiments in detail. Note that, the embodiments of the disclosure and the features of the embodiments can be combined with each other if there is no conflict.

Fig. 3 is a flowchart of a data transmission method according to the embodiment one of the present invention, as shown in Fig. 3, the method mainly comprises the following steps (step S302 to step S304):
step S302, a trusted wireless local area network access gateway (TWAG) receiving a fixed network gateway identity sent by a fixed network gateway; and
step S304, the TWAG sending to the fixed network gateway, according to the fixed network gateway identity, a downlink data packet which is sent to the TWAG by a packet data network gateway (P-GW).

In the present embodiment, step S304 can be implemented in this way: after receiving the fixed network gateway identity, the TWAG establishes a corresponding relationship between the fixed network gateway identity and a tunnel between the TWAG and the P-GW; and after the downlink data packet arrives at the TWAG via the tunnel, the TWAG sends the downlink data packet to the fixed network gateway according to the corresponding relationship.

In the present embodiment, step S304 can be implemented in one of the following ways: the TWAG directly receives a first transmission message from the fixed network gateway, wherein the first transmission message carries the fixed network gateway identity of the fixed network gateway; and after an authentication, authorization and accounting server (BBF AAA) receives a second transmission message carrying the fixed network gateway identity and sent by the fixed network gateway, the TWAG receives a third transmission message sent by the BBF AAA, wherein the third transmission message carries the fixed network gateway identity.

In the present embodiment, the fixed network gateway is one of the following: an IP edge equipment (IP Edge), a broadband network gateway equipment (BNG) and a broadband remote access server (BRAS).

In the present embodiment, the first transmission message, second transmission message and third transmission message are all one of the following: an authentication message, an attachment request message, an access request message, a Radius message and a Diameter message.

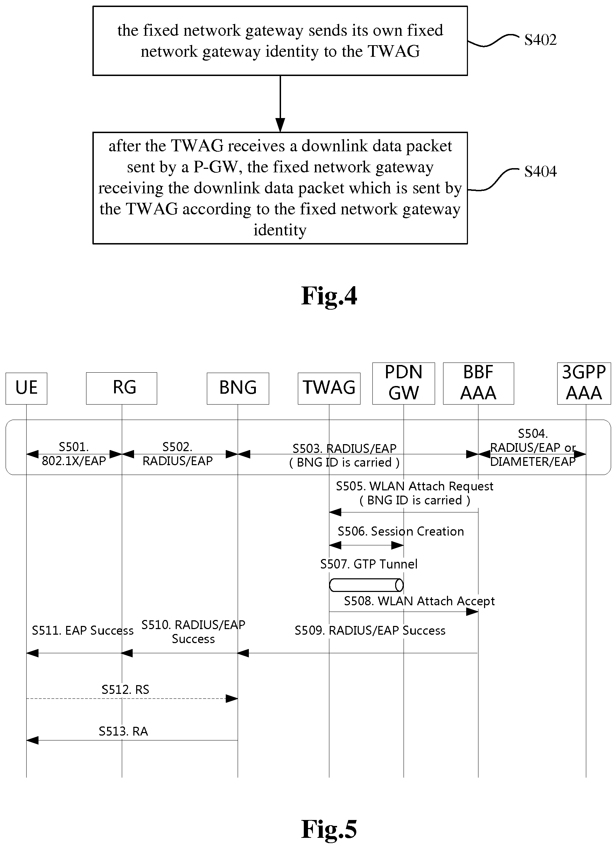

Fig. 4 is a flowchart of a data transmission method according to the embodiment two of the present invention, as shown in Fig. 4, the method mainly comprises the following steps (step S402 to step S404):
step S402, the fixed network gateway sending its own fixed network gateway identity to the trusted wireless local area network access gateway (TWAG); and
step S404, after the TWAG receives a downlink data packet sent by a packet data network gateway (P-GW), the fixed network gateway receiving the downlink data packet which is sent by the TWAG according to the fixed network gateway identity.

In step S404 of the present embodiment, when the fixed network gateway receives the downlink data packet which is sent by the TWAG according to the fixed network gateway identity, it can be implemented in this way: the fixed network gateway receives the downlink data packet from the TWAG, wherein after establishing the corresponding relationship between the fixed network gateway identity and the tunnel between the TWAG and the P-GW, the TWAG sends the downlink data packet to the fixed network gateway according to the corresponding relationship.

In the present embodiment, step S402 can be implemented in this way: the fixed network gateway directly sends to the TWAG the first transmission message carrying the fixed network gateway identity of the fixed network gateway; and the fixed network gateway sends the second transmission message carrying the fixed network gateway identity to the authentication, authorization and accounting server (BBF AAA), and instructs the BBF AAA to send the third transmission message to the TWAG, wherein the transmission message carries the fixed network gateway identity.

In the present embodiment, the fixed network gateway is one of the following: an IP edge equipment (IP Edge), a broadband network gateway equipment (BNG) and a broadband remote access server (BRAS).

In the present embodiment, the first transmission message, second transmission message and third transmission message are respectively one of the following: an authentication message, an attachment request message, an access request message, a Radius message and a Diameter message.

The above-mentioned data transmission method will be illustrated in detail below in combination with Figs. 5 to 7, the preferred embodiment one, the preferred embodiment two and the preferred embodiment three.

### Embodiment one

In the present embodiment, in the access authentication process of a terminal UE, a BNG sends an ID (generally being an IP address, or an FQDN) of the BNG itself to a BBF AAA via an authentication message (a Radius message of the EAP authentication), and the BBF AAA sends the received BNG ID to a TWAG via an attachment request message (one step of the authentication message, the Radius message).

Because in the above-mentioned message, besides the BNG ID, there is also a terminal identifier, in addition, the attachment request message also triggers a subsequent establishment of a tunnel between the TWAG and the PDN gateway. Thus, at least a corresponding relationship between the BNG ID and "the tunnel between the TWAG and the PDN gateway" is established on the TWAG. Hence, after a service data packet arrives at the TWAG from the PDN gateway, the TWAG can know which BNG the data packet is routed to according to the above-mentioned corresponding relationship.

The TWAG can route the data to the BNG by adopting any method in the prior art. For example, an equipment-level tunnel exists between the TWAG and the BNG, then the tunnel can be used to perform the sending; or the TWAG designates a route, but the next hop must be a BNG; or the TWAG is triggered by the attachment request message to establish a dedicated tunnel for serving the UE with the BNG, and send the data packet to the BNG via the dedicated tunnel.

Fig. 5 is a flowchart of a data transmission method according to the preferred embodiment one of the present invention. As shown in Fig. 5, the data transmission process provided in the present embodiment comprises the following steps:
Step S501, the 3GPP UE sending an authentication protocol start (EAPoL-Start) message to the RG to perform authentication via the 802.1X protocol, wherein the UE is the client of the 802.1X, and the RG is the authenticator of the 802.1X.
Step S502, after receiving the EAPoL Start message sent by the UE, the RG sending an authentication protocol ID request (EAP Identity Request) to the UE, which is used for notifying the UE to report the user name; after receiving an EAP Identity Request message sent by the RG, the UE replying to the RG with an authentication protocol ID response (EAP Identity Response) message, wherein the message carries the user name; and then the RG encapsulating the received EAP Identity Response message into an authentication access request (RADIUS Access Request) message, and sending the RADIUS Access Request message to the BNG.
Step S503, the BNG, as an RADIUS Proxy, sending the RADIUS Access Request message received from the RG to a BBF AAA, and the BNG sending a BNG ID to the BBF AAA in the RADIUS Access Request message which is sent to the BBF AAA by proxy, or coordinating with the message.
Step S504, the BBF AAA forwarding the RADIUS Access Request message received from the BNG to the 3GPP AAA according to the Network Address Identifier (NAI) of the UE. If the BBF network uses the RADIUS protocol, while the 3GPP network uses the DIAMETER protocol, then there exists a TA (Translation Agent) between the BBF AAA and the 3GPP AAA to perform protocol conversion.
Step S505, the BBF AAA sending to the TWAG an UE attachment request message which carries the subscription information of the UE; and sending the BNG ID to the TWAG.
Step S506, the TWAG sending a session creation request message to a PDN gateway of the 3GPP network, and the P-GW responding a session creation response to the TWAG, wherein in the session creation response responded to the TWAG, the PDN gateway sends an IP address (which may be an IPv4 address and/or an IPv6 address) allocated for the terminal by the PDN gateway to the TWAG.
   Thus, a corresponding relationship between the BNG ID and "the tunnel between the TWAG and the PDN gateway" is established on the TWAG. When the subsequent service runs smoothly, and after the downlink service data packet arrives at the TWAG from the PDN gateway, the TWAG can know which BNG the data packet is routed to according to the above-mentioned corresponding relationship.
Step S507, a tunnel being established between the TWAG and the PDN gateway through step S506.
   It should be noted that step S506 and step S507 assume that a GTP protocol is adopted between the TWAG and the PDN gateway. If a PMIPv6 (proxy mobile IP version 6) protocol is adopted between the TWAG and the PDN gateway, the message in step S506 should be a PBU (Proxy binding update) and PBA (Proxy binding Ack) message, and the tunnel corresponding to S507 should be a PMIPv6 tunnel.
Step S508, the TWAG replying to the BBF AAA with an UE attachment success message which carries the IP address of the UE.
Step S509, the BBF AAA sending to the BNG an UE authentication success response message which carries the IP address of the UE.
Step S510, at the same time, the BNG sending the authentication success response message of the UE to the RG according to the received UE address.
Step S511, the RG replying to the UE with the authentication success response message.
Step S512, the UE sending to the RG an address request message, for example, a DHCP Discover or Router Solicitation message (the RS message is optional).
Step S513, after receiving the address request message initiated by the UE, the BNG sending to the UE the IP address of the UE, for example, a DHCP Offer or RA message.

### Embodiment two

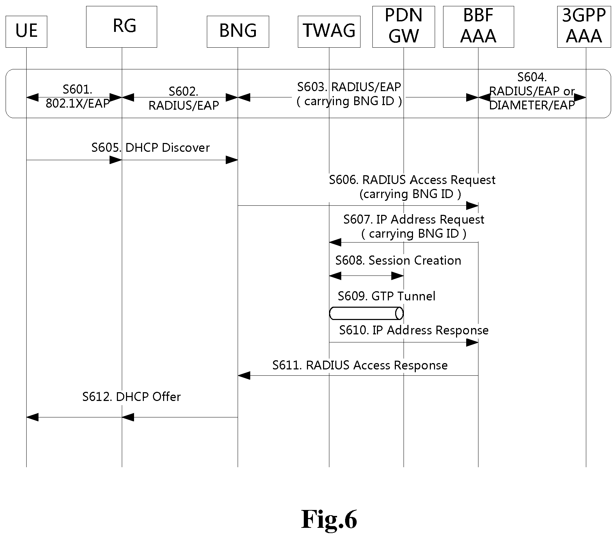

In the present embodiment, the operations of user authentication and IPv4 address allocation of another type of 3GPP UE accessing from a fixed network may be taken as a basis for introducing how to realise the data transmission method. Compared with the embodiment one, the difference between the two the embodiment lies in different sending timings and message bodies for transmitting a BNG ID message. Fig. 6 is a flowchart of a data transmission method according to the preferred embodiment two of the present invention. As shown in Fig. 6, the data transmission process provided in the present embodiment comprises the following steps:
Step S601, the 3GPP UE sending an authentication protocol start (EAPoL-Start) message to the RG to perform authentication via the 802.1X protocol, wherein the UE is the client of the 802.1X, and the RG is the authenticator of the 802.1X.
Step S602, after receiving the EAPoL Start message sent by the UE, the RG sending an authentication protocol ID request (EAP Identity Request) to the UE, which is used for notifying the UE to report the user name; after receiving an EAP Identity Request message sent by the RG, the UE replying to the RG with an authentication protocol ID response (EAP Identity Response) message, wherein the message carries the user name; and then the RG encapsulating the received EAP Identity Response message into an authentication access request (RADIUS Access Request) message, and sending the RADIUS Access Request message to the BNG.
Step S603, the BNG, as an RADIUS Proxy, sending the RADIUS Access Request message received from the RG to a BBF AAA.
Step S604, the BBF AAA forwarding the RADIUS Access Request message received from the BNG to the 3GPP AAA according to the Network Address Identifier (NAI) of the UE. If the BBF network uses the RADIUS protocol, while the 3GPP network uses the DIAMETER protocol, then there exists a TA (Translation Agent) between the BBF AAA and the 3GPP AAA to perform protocol conversion.
   If the authentication of the 3GPP UE in the 3GPP AAA succeeds, then the 3GPP AAA replying to the BBF AAA with an authentication success response message, and further more, the BBF replying to the BNG, the BNG replying to the RG, and the RG replying to the UE.
Step S605, the UE sending a DHCP Discover message to request an IPv4 address; and if the RG is of a route-type, the RG relaying the message to the BNG.
Step S606, the BNG sending the RADIUS Access Request to the BBF AAA to request an address for the UE, wherein the RADIUS Access Request carries the MAC address of the UE; and the BNG sending a BNG ID to the BBF AAA in the RADIUS Access Request message, or coordinating with the message.
Step S607, after receiving the message sent by the BNG, the BBF AAA sending to the TWAG an IP address request message which carries the subscription information of the UE; and sending the BNG ID to the TWAG.
Step S608, the TWAG sending a session creation request message to a PDN gateway of the 3GPP network, and the P-GW responding a session creation response to the TWAG, wherein in the session creation response responded to the TWAG, the PDN gateway sends an IP address (which may be an IPv4 address and/or an IPv6 address) allocated for the terminal by the PDN gateway to the TWAG.
   Thus, a corresponding relationship between the BNG ID and "the tunnel between the TWAG and the PDN gateway" is established on the TWAG. When the subsequent service runs smoothly, and after the downlink service data packet arrives at the TWAG from the PDN gateway, the TWAG can know which BNG the data packet is routed to according to the above-mentioned corresponding relationship.
Step S609, a tunnel being established between the TWAG and the PDN gateway through step S608.
   It should be noted that step S608 and step S609 assume that a GTP protocol is adopted between the TWAG and the PDN gateway. If a PMIPv6 (proxy mobile IP version 6) protocol is adopted between the TWAG and the PDN gateway, the message in step S606 should be a PBU (Proxy binding update) and PBA (Proxy binding Ack) message, and the tunnel corresponding to S607 should be a PMIPv6 tunnel.
Step S610, the TWAG replying to the BBF AAA with an IP address response message which carries the IP address of the UE.
Step S611, the BBF AAA replying to the BNG with a response message (a RADIUS Access Response message) which carries the IP address of the UE.
Step S612, the BNG sending the IPv4 address to the UE.

### Embodiment three

In the present embodiment, it is based on another assumption, that is to say, in the access authentication process of a terminal UE, and in the process that a TWAG serves as an intermediate proxy network element to transmit an authentication message, and a BNG sends an ID (generally being an IP address, or an FQDN) of the BNG itself to a BBF AAA via the authentication message (a Radius message of the EAP authentication), the message is forwarded via the TWAG, and the BNG ID is acquired by the TWAG.

Because in the above-mentioned message, besides the BNG ID, there is also a terminal identifier, in addition, the attachment request message also triggers a subsequent establishment of a tunnel between the TWAG and the PDN gateway. Thus, at least a corresponding relationship between the BNG ID and "the tunnel between the TWAG and the PDN gateway" is established on the TWAG. Hence, after a service data packet arrives at the TWAG from the PDN gateway, the TWAG can know which BNG the data packet is routed to according to the above-mentioned corresponding relationship.

The TWAG can route the data to the BNG by adopting any method in the prior art. For example, an equipment-level tunnel exists between the TWAG and the BNG, then the tunnel can be used to perform the sending; or the TWAG designates a route, but the next hop must be a BNG; or the TWAG is triggered by the attachment request message to establish a dedicated tunnel for serving the UE with the BNG, and send the data packet to the BNG via the dedicated tunnel.

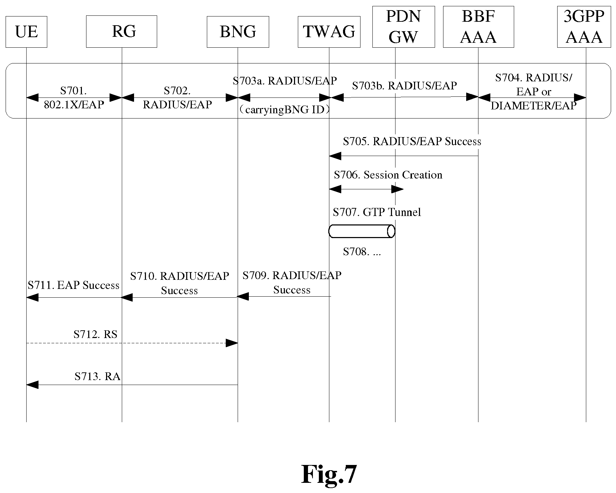

Fig. 7 is a flowchart of a data transmission method according to the preferred embodiment three of the present invention. As shown in Fig. 7, the data transmission method provided in the present embodiment comprises the following steps:
Step S701, the 3GPP UE sending an authentication protocol start (EAPoL-Start) message to the RG to perform authentication via the 802.1X protocol, wherein the UE is the client of the 802.1X, and the RG is the authenticator of the 802.1X.
Step S702, after receiving the EAPoL Start message sent by the UE, the RG sending an authentication protocol ID request (EAP Identity Request) to the UE, which is used for notifying the UE to report the user name; after receiving an EAP Identity Request message sent by the RG, the UE replying to the RG with an authentication protocol ID response (EAP Identity Response) message, wherein the message carries the user name; and then the RG encapsulating the received EAP Identity Response message into an authentication access request (RADIUS Access Request) message, and sending the RADIUS Access Request message to the BNG.
Steps S703a and S703b, the BNG and the TWAG, as the RADIUS Proxies, sending the RADIUS Access Request message received from the RG to a BBF AAA; and the BNG carrying a BNG ID in the RADIUS Access Request message, or coordinating with the message, which is intermediately intercepted and recorded by the TWAG; and finally the message being transmitted to the BBF AAA.
Step S704, the BBF AAA forwarding the RADIUS Access Request message received from the BNG to the 3GPP AAA according to the Network Address Identifier (NAI) of the UE. If the BBF network uses the RADIUS protocol, while the 3GPP network uses the DIAMETER protocol, then there exists a TA (Translation Agent) between the BBF AAA and the 3GPP AAA to perform protocol conversion.
Step S705, the BBF AAA sending a Radius/EAP success message to the TWAG.
Step S706, the TWAG sending a session creation request message to a PDN gateway of the 3GPP network, and the P-GW responding a session creation response to the TWAG, wherein in the session creation response responded to the TWAG, the PDN gateway sends an IP address (which may be an IPv4 address and/or an IPv6 address) allocated for the terminal by the PDN gateway to the TWAG.
   Thus, a corresponding relationship between the BNG ID and "the tunnel between the TWAG and the PDN gateway" is established on the TWAG. When the subsequent service runs smoothly, and after the downlink service data packet arrives at the TWAG from the PDN gateway, the TWAG can know which BNG the data packet is routed to according to the above-mentioned corresponding relationship.
Step S707-, a tunnel being established between the TWAG and the PDN gateway through step S706.
   It should be noted that step S706 and step S707 assume that a GTP protocol is adopted between the TWAG and the PDN gateway. If a PMIPv6 (proxy mobile IP version 6) protocol is adopted between the TWAG and the PDN gateway, the message in step S706 should be a PBU (Proxy binding update) and PBA (Proxy binding Ack) message, and the tunnel corresponding to S707 should be a PMIPv6 tunnel.
Step S708 is omitted.
Step S709, the BBF AAA sending to the BNG an UE authentication success response message which carries the IP address of the UE.
Step S710, at the same time, the BNG sending the authentication success response message of the UE to the RG according to the received UE address.
Step S711, the RG replying to the UE with the authentication success response message.
Step S712, the UE sending to the RG an address request message, for example, a DHCP Discover or Router Solicitation message (the RS message is optional).
Step S713, after receiving the address request message initiated by the UE, the BNG sending to the UE the IP address of the UE, for example, a DHCP Offer or RA message.

By using the data transmission method, which is provided in the above-mentioned embodiment, that a fixed network gateway identity of a fixed network gateway is carried in an authentication message in an authentication process of a user terminal (UE) accessing an evolved packet network (EPC); and after establishing a corresponding relationship between the fixed network gateway identity and a tunnel between the TWAG and the packet data network gateway (PDN GW), the service data is transmitted according to the corresponding relationship, the problem that the TWAG cannot send the service data packet to the correct fixed network gateway so as to send same to the correct terminal UE in the related technologies is solved.

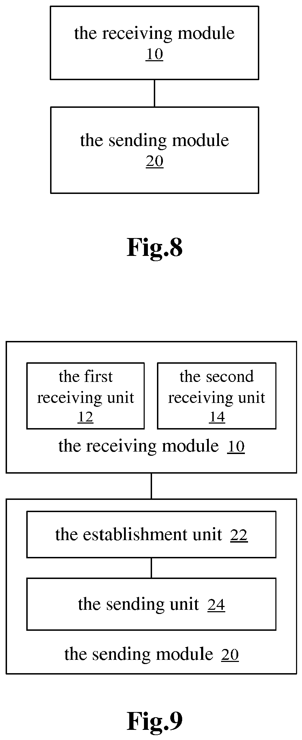

Fig. 8 is a structural block diagram of a data transmission device according to the embodiment one of the present invention, wherein the device is used for realising the data transmission method provided in the above-mentioned embodiment and is located in the trusted wireless local area network access gateway (TWAG). As shown in Fig. 8, the device mainly comprises a receiving module **10** and a sending module **20.** Wherein the receiving module **10** is configured to receive the fixed network gateway identity sent by the fixed network gateway; and the sending module **20** is connected to the receiving module **10** and is configured to send to the fixed network gateway, according to the fixed network gateway identity, the downlink data packet which is sent to the trusted wireless local area network access gateway (TWAG) by the packet data network gateway (P-GW).

Fig. 9 is a structural block diagram of a data transmission device according to the preferred embodiment one of the present invention. As shown in Fig. 9, in the present invention, the authentication message is used when the evolved packet network (EPC) performs access authentication on the user terminal (UE) in the authentication process of the UE accessing the EPC.

In the device provided in the preferred embodiment, the sending module **20** comprises: an establishment unit **22** which is configured to establish, after the receiving module receives the fixed network gateway identity, the corresponding relationship between the fixed network gateway identity and the tunnel between the TWAG and the P-GW; and a sending unit **24** which is connected to the establishment unit **22** and is configured to send, after the downlink data packet arrives at the TWAG via the tunnel, the downlink data packet to the fixed network gateway according to the corresponding relationship.

In the device provided in the preferred embodiment, the receiving module **10** comprises: a first receiving unit **12** which is configured to directly receive the first transmission message from the fixed network gateway, wherein the first transmission message carries the fixed network gateway identity of the fixed network gateway; or a second receiving unit **14** which is configured to receive, after the authentication, authorization and accounting server (BBF AAA) receives the second transmission message carrying the fixed network gateway identity and sent by the fixed network gateway, the third transmission message sent by the BBF AAA, wherein the third transmission message carries the fixed network gateway identity.

In the present embodiment, the fixed network gateway is one of the following: an IP edge equipment (IP Edge), a broadband network gateway equipment (BNG) and a broadband remote access server (BRAS).

In the present embodiment, the first transmission message, second transmission message and third transmission message are all one of the following: an authentication message, an attachment request message, an access request message, a Radius message and a Diameter message.

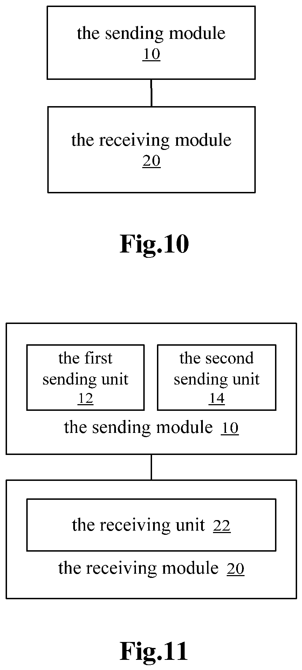

Fig. 10 is a structural block diagram of a data transmission device according to the embodiment two of the present invention, wherein the device is used for realising the data transmission method provided in the above-mentioned embodiment and is located in the fixed network gateway. As shown in Fig. 10, the device mainly comprises: a sending module **10** which is configured to send the fixed network gateway identity of the fixed network gateway to the trusted wireless local area network access gateway (TWAG); and a receiving module **20** which is configured to receive, after the TWAG receives the downlink data packet sent by the packet data network gateway (P-GW), the downlink data packet which is sent according to the fixed network gateway identity by the TWAG.

Fig. 11 is a structural block diagram of a data transmission device according to the preferred embodiment two of the present invention. As shown in Fig. 11, in the present invention, the authentication message is used when the evolved packet network (EPC) performs access authentication on the user terminal (UE) in the authentication process of the UE accessing the EPC.

In the device provided in the preferred embodiment, the receiving module **20** comprises a receiving unit **22** which is configured to receive the downlink data packet from the TWAG, wherein after establishing the corresponding relationship between the fixed network gateway identity and the tunnel between the TWAG and the P-GW, the TWAG sends the downlink data packet to the fixed network gateway according to the corresponding relationship.

In the device provided in the preferred embodiment, the sending module **10** comprises: a first sending unit **12** which is configured to directly send to the TWAG the first transmission message carrying the fixed network gateway identity of the fixed network gateway; or a second sending unit **14** which is configured to send the second transmission message carrying the fixed network gateway identity to the authentication, authorization and accounting server (BBF AAA), and instructs the BBF AAA to send the third transmission message to the TWAG, wherein the third transmission message carries the fixed network gateway identity.

In the present embodiment, the fixed network gateway is one of the following: an IP edge equipment (IP Edge), a broadband network gateway equipment (BNG) and a broadband remote access server (BRAS).

In the present embodiment, the first transmission message, second transmission message and third transmission message are all one of the following: an authentication message, an attachment request message, an access request message, a Radius message and a Diameter message.

By using the data transmission device, which is provided in the above-mentioned embodiment, that a fixed network gateway identity of a fixed network gateway is carried in an authentication message in an authentication process of a user terminal (UE) accessing an evolved packet network (EPC); and after establishing a corresponding relationship between the fixed network gateway identity and a tunnel between the TWAG and the packet data network gateway (PDN GW), the service data is transmitted according to the corresponding relationship, the problem that the TWAG cannot send the service data packet to the correct fixed network gateway so as to send same to the correct terminal UE in the related technologies is solved.

From the description above, it can be seen that the disclosure achieves the following technique effects:
By the way of carrying a fixed network gateway identity of a fixed network gateway in an authentication message in an authentication process of a user terminal (UE) accessing an evolved packet network (EPC); and after establishing a corresponding relationship between the fixed network gateway identity and a tunnel between the TWAG and the packet data network gateway (PDN GW), transmitting service data according to the corresponding relationship, the problem that the TWAG cannot send the service data packet to the correct fixed network gateway so as to send same to the correct terminal UE in the related technologies is solved, the correct routing and forwarding of the downlink data service is realised, and thus the effect that smooth deployment of a terminal UE service is ensured is achieved.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the disclosure is not restricted to any particular hardware and software combination.

## Claims

1. A method for transmitting data performed by a trusted WLAN access gateway, TWAG, in a Broadband Forum, BBF, access network, said method comprising:
the TWAG receiving, via an attachment request message, a fixed network gateway identity sent by a fixed network gateway (S302) in the BBF access network; and
the TWAG sending to the fixed network gateway, according to the fixed network gateway identity, a downlink data packet which is sent to the TWAG by a packet data network gateway, P-GW, in a 3GPP core network (S304);
wherein the TWAG sending to the fixed network gateway, according to the fixed network gateway identity, the downlink data packet which is sent to the TWAG by the packet data network gateway, P-GW, comprises:
after receiving the fixed network gateway identity, the TWAG establishing a corresponding relationship between the fixed network gateway identity and a tunnel between the TWAG and the P-GW, wherein the establishment of the tunnel is triggered by the attachment message request; and
after the downlink data packet arrives at the TWAG via the tunnel, the TWAG sending the downlink data packet to the fixed network gateway according to the corresponding relationship.

2. The method according to claim 1, **characterized in that** the TWAG receives the fixed network gateway identity sent by the fixed network gateway (S302), comprising one of the following ways:
the TWAG directly receiving a first transmission message from the fixed network gateway, wherein the first transmission message carries the fixed network gateway identity of the fixed network gateway; and
after an authentication, authorization and accounting server, BBF AAA, receives a second transmission message carrying the fixed network gateway identity and sent by the fixed network gateway, the TWAG receiving a third transmission message sent by the BBF AAA, wherein the third transmission message carries the fixed network gateway identity.

3. The method according to claim 2, **characterized in that** the fixed network gateway is one of the following:
an IP edge equipment, a broadband network gateway equipment, BNG, and a broadband remote access server, BRAS.

4. The method according to claim 3, **characterized in that** the first transmission message, second transmission message and third transmission message are respectively one of the following:
an authentication message, an attachment request message, an access request message, a Radius message and a Diameter message.

5. A trusted WLAN access gateway, TWAG, adapted to be placed in a Broadband Forum, BBF, access network, the TWAG comprising:
a receiving module (10), configured to receive, via an attachment request message, a fixed network gateway identity sent by a fixed network gateway in the BBF access network; and
a sending module (20), configured to send to the fixed network gateway, according to the fixed network gateway identity, a downlink data packet received by the TWAG from a packet data network gateway, P-GW, in a 3GPP core network; wherein the sending module (20) comprises:
an establishment unit (22), configured to establish, after the receiving module (10) receives the fixed network gateway identity, a corresponding relationship between the fixed network gateway identity and a tunnel between the TWAG and the P-GW, wherein the establishment of the tunnel is triggered by the attachment message request; and
a sending unit (24), configured to send, after the downlink data packet arrives at the TWAG via the tunnel, the downlink data packet to the fixed network gateway according to the corresponding relationship.

6. The trusted WLAN access gateway according to claim 5, **characterized in that** the receiving module (10) comprises:
a first receiving unit (12), configured to directly receive a first transmission message from the fixed network gateway, wherein the first transmission message carries the fixed network gateway identity of the fixed network gateway; or
a second receiving unit (14), configured to receive, after an authentication, authorization and accounting server, BBF AAA, receives a second transmission message carrying the fixed network gateway identity and sent by the fixed network gateway, a third transmission message sent by the BBF AAA, wherein the third transmission message carries the fixed network gateway identity.

7. The trusted WLAN access gateway according to claim 6, **characterized in that** the fixed network gateway is one of the following:
an IP edge equipment, a broadband network gateway equipment, BNG, and a broadband remote access server, BRAS.

8. The trusted WLAN access gateway according to claim 7, **characterized in that** the first transmission message, second transmission message and third transmission message are respectively one of the following:
an authentication message, an attachment request message, an access request message, a Radius message and a Diameter message.

## Patentansprüche

1. Verfahren zur Datenübertragung, durchgeführt durch ein Trusted WLAN Access Gateway, TWAG, in einem Broadband Forum, BBF, -Zugriffsnetz, wobei das Verfahren Folgendes umfasst:
Empfangen, durch das TWAG, über eine Anschlussanfragemeldung, einer Festnetz-Gateway-Identität, geschickt von einem Festnetz-Gateway (S302) im BBF-Zugriffsnetz; und
Senden, durch das TWAG an das Festnetz-Gateway, gemäß der Festnetz-Gateway-Identität, eines Downlink-Datenpakets, das an das TWAG durch ein Paketdatennetz-Gateway, P-GW, in einem 3GPP-Kernnetz (S304) gesendet wird;
wobei das Senden durch das TWAG an das Festnetz-Gateway gemäß der Festnetz-Gateway-Identität des Downlink-Datenpakets, das an das TWAG durch das Paketdatennetz-Gateway, P-GW, gesendet wird, Folgendes umfasst:
nach dem Empfang der Festnetz-Gateway-Identität, Festsetzen, durch das TWAG, einer entsprechenden Beziehung zwischen der Festnetz-Gateway-Identität und einem Tunnel zwischen dem TWAG und dem P-GW, wobei das Festsetzen des Tunnels durch die Anschlussanfragemeldung ausgelöst wird; und,
nachdem das Downlink-Datenpaket am TWAG über den Tunnel ankommt, Senden, durch das TWAG, des Downlink-Datenpakets an das Festnetz-Gateway gemäß der entsprechenden Beziehung.

2. Verfahren nach Anspruch 1, **dadurch gekennzeichnet, dass** das TWAG die Festnetz-Gateway-Identität, gesendet vom Festnetz-Gateway (S302), empfängt, umfassend einen der folgenden Wege:
direktes Empfangen, durch das TWAG, einer ersten Übertragungsmeldung vom Festnetz-Gateway, wobei die erste Übertragungsmeldung die Festnetz-Gateway-Identität des Festnetz-Gateways trägt; und
nachdem ein Authentifizierungs-, Autorisierungs- und Abrechnungsserver, BBF AAA, eine zweite Übertragungsmeldung empfängt, die die Festnetz-Gateway-Identität trägt und gesendet vom Festnetz-Gateway, Empfangen, durch das TWAG, einer dritten Übertragungsmeldung, gesendet vom BBF AAA, wobei die dritte Übertragungsmeldung die Festnetz-Gateway-Identität trägt.

3. Verfahren nach Anspruch 2, **dadurch gekennzeichnet, dass** das Festnetz-Gateway eines der Folgenden ist:
eine IP-Edge-Ausrüstung, eine Broadband Network-Gateway-Ausrüstung, BNG, und ein Broadband Remote Access Server, BRAS.

4. Verfahren nach Anspruch 3, **dadurch gekennzeichnet, dass** die erste Übertragungsmeldung, die zweite Übertragungsmeldung und die dritte Übertragungsmeldung jeweils eines der Folgenden sind:
eine Authentifizierungsmeldung, eine Anschlussanfragemeldung, eine Zugriffsanfragemeldung, eine Radiusmeldung und eine Diametermeldung.

5. Trusted WLAN Access Gateway, TWAG, das ausgelegt ist, um in einem Broadband Forum, BBF, Zugriffsnetz angeordnet zu sein, wobei das TWAG Folgendes umfasst:
ein Empfangsmodul (10), das konfiguriert ist, um über eine Anschlussanfragemeldung eine Festnetz-Gateway-Identität, gesendet von einem Festnetz-Gateway, im BBF-Zugriffsnetz zu empfangen; und
ein Sendemodul (20), das konfiguriert ist, um an das Festnetz-Gateway, gemäß der Festnetz-Gateway-Identität, ein Downlink-Datenpaket zu schicken, empfangen durch das TWAG von einem Paketdatennetz-Gateway, P-GW, in einem 3GPP-Kernnetz;
wobei das Sendemodul (20) Folgendes umfasst:
eine Aufbaueinheit (22), die konfiguriert ist um, nach dem das Empfangsmodul (10) die Festnetz-Gateway-Identität empfängt, eine entsprechende Beziehung zwischen der Festnetz-Gateway-Identität und einem Tunnel zwischen dem TWAG und dem P-GW, aufzubauen, wobei der Aufbau des Tunnels durch die Anschlussanfragemeldung ausgelöst wird; und
eine Sendeeinheit (24), die konfiguriert ist um, nachdem das Downlink-Datenpaket am TWAG über den Tunnel ankommt, das Downlink-Datenpaket an das Festnetz-Gateway gemäß der entsprechenden Beziehung zu senden.

6. Trusted WLAN Access Gateway nach Anspruch 5, **dadurch gekennzeichnet, dass** das Empfangsmodul (10) Folgendes umfasst:
eine erste Empfangseinheit (12), die konfiguriert ist, um direkt eine erste Übertragungsmeldung vom Festnetz-Gateway zu empfangen, wobei die erste Übertragungsmeldung die Festnetz-Gateway-Identität des Festnetz-Gateways trägt; oder
eine zweite Empfangseinheit (14), die konfiguriert ist um, nachdem der Authentifizierungs-, Autorisierungs-und Abrechnungsserver, BBF AAA, eine zweite Übertragungsmeldung empfängt, die die Festnetz-Gateway-Identität trägt und gesendet vom Festnetz-Gateway, eine dritte Übertragungsmeldung zu empfangen, gesendet vom BBF AAA, wobei die dritte Übertragungsmeldung die Festnetz-Gateway-Identität trägt.

7. Trusted WLAN Access Gateway nach Anspruch 6, **dadurch gekennzeichnet, dass** das Festnetz-Gateway eines der Folgenden ist:
eine IP-Edge-Ausrüstung, eine Broadband Network Gateway-Ausrüstung, BNG, und ein Broadband Remote Access Server, BRAS.

8. Trusted WLAN Access Gateway nach Anspruch 7, **dadurch gekennzeichnet, dass** die erste Übertragungsmeldung, die zweite Übertragungsmeldung und die dritte Übertragungsmeldung jeweils eines der Folgenden sind:
eine Authentifizierungsmeldung, eine Anschlussanfragemeldung, eine Zugriffsanfragemeldung, eine Radiusmeldung und eine Diametermeldung.

## Revendications

1. Procédé de transmission de données effectué par une passerelle d'accès WLAN de confiance, TWAG, dans un réseau d'accès de forum à large bande, BBF, ledit procédé comprenant :
la réception par la TWAG, par le biais d'un message de demande de rattachement, d'une identité de passerelle de réseau fixe transmise par une passerelle de réseau fixe (S302) dans le réseau d'accès BBF ; et
la transmission par la TWAG à la passerelle de réseau fixe, en fonction de l'identité de passerelle de réseau fixe, d'un paquet de données de liaison descendante qui est transmis à la TWAG par une passerelle de réseau de données par paquets, P-GW, dans un réseau central 3GPP (S304) ;
dans lequel la transmission par la TWAG à la passerelle de réseau fixe, en fonction de l'identité de passerelle de réseau fixe, du paquet de données de liaison descendante qui est transmis à la TWAG par la passerelle de réseau de données par paquets, P-GW, comprend :
après la réception de l'identité de passerelle de réseau fixe, l'établissement par la TWAG d'une relation correspondante entre l'identité de passerelle de réseau fixe et un tunnel entre la TWAG et la P-GW, dans lequel l'établissement du tunnel est déclenché par le message de demande de rattachement ; et
après que le paquet de données de liaison descendante arrive à la TWAG par le biais du tunnel, la transmission par la TWAG du paquet de données de liaison descendante à la passerelle de réseau fixe en fonction de la relation correspondante.

2. Procédé selon la revendication 1, **caractérisé en ce que** la TWAG reçoit l'identité de passerelle de réseau fixe transmise par la passerelle de réseau fixe (S302), comprenant une des manières suivantes :
la réception directe par la TWAG d'un premier message de transmission à partir de la passerelle de réseau fixe, dans lequel le premier message de transmission comporte l'identité de passerelle de réseau fixe de la passerelle de réseau fixe ; et
après qu'un serveur d'authentification, d'autorisation et de comptabilité, BBF AAA, reçoit un deuxième message de transmission comportant l'identité de passerelle de réseau fixe et transmis par la passerelle de réseau fixe, la réception par la TWAG d'un troisième message de transmission transmis par le BBF AAA, dans lequel le troisième message de transmission comporte l'identité de passerelle de réseau fixe.

3. Procédé selon la revendication 2, **caractérisé en ce que** la passerelle de réseau fixe est un des suivants :
un équipement de bord IP, un équipement de passerelle de réseau à large bande, BNG, et un serveur d'accès à distance à large bande, BRAS.

4. Procédé selon la revendication 3, **caractérisé en ce que** le premier message de transmission, le deuxième message de transmission et le troisième message de transmission sont respectivement un des suivants :
un message d'authentification, un message de demande de rattachement, un message de demande d'accès, un message Radius et un message Diameter.

5. Passerelle d'accès WLAN de confiance, TWAG, adaptée pour être placée dans un réseau d'accès de forum à large bande, BBF, la TWAG comprenant :
un module de réception (10) configuré pour recevoir, par le biais d'un message de demande de rattachement, une identité de passerelle de réseau fixe transmise par une passerelle de réseau fixe dans le réseau d'accès BBF ; et
un module de transmission (20) configuré pour transmettre à la passerelle de réseau fixe, en fonction de l'identité de passerelle de réseau fixe, un paquet de données de liaison descendante reçu par la TWAG à partir d'une passerelle de réseau de données par paquets, P-GW, dans un réseau central 3GPP ;
dans laquelle le module de transmission (20) comprend :
une unité d'établissement (22) configurée pour établir, après que le module de réception (10) reçoit l'identité de passerelle de réseau fixe, une relation correspondante entre l'identité de passerelle de réseau fixe et un tunnel entre la TWAG et la P-GW, dans laquelle l'établissement du tunnel est déclenché par le message de demande de rattachement ; et
une unité de transmission (24) configurée pour transmettre, après que le paquet de données de liaison descendante arrive à la TWAG par le biais du tunnel, le paquet de données de liaison descendante à la passerelle de réseau fixe en fonction de la relation correspondante.

6. Passerelle d'accès WLAN de confiance selon la revendication 5, **caractérisée en ce que** le module de réception (10) comprend :
une première unité de réception (12) configurée pour recevoir directement un premier message de transmission à partir de la passerelle de réseau fixe, dans laquelle le premier message de transmission comporte l'identité de passerelle de réseau fixe de la passerelle de réseau fixe ; ou
une deuxième unité de réception (14) configurée pour recevoir, après qu'un serveur d'authentification, d'autorisation et de comptabilité, BBF AAA, reçoit un deuxième message de transmission comportant l'identité de passerelle de réseau fixe et transmis par la passerelle de réseau fixe, un troisième message de transmission transmis par le BBF AAA, dans laquelle le troisième message de transmission comporte l'identité de passerelle de réseau fixe.

7. Passerelle d'accès WLAN de confiance selon la revendication 6, **caractérisée en ce que** la passerelle de réseau fixe est un des suivants :
un équipement de bord IP, un équipement de passerelle de réseau à large bande, BNG, et un serveur d'accès à distance à large bande, BRAS.

8. Passerelle d'accès WLAN de confiance selon la revendication 7, **caractérisée en ce que** le premier message de transmission, le deuxième message de transmission et le troisième message de transmission sont respectivement un des suivants :
un message d'authentification, un message de demande de rattachement, un message de demande d'accès, un message Radius et un message Diameter.
